# EUROPEAN PATENT SPECIFICATION

(11) **EP 2 205 484 B1**
(45) Date of publication and mention of the grant of the patent: **09.01.2013**
(21) Application number: 08848221.1
(22) Date of filing: 07.10.2008
(51) Int. Cl.: B64C 1/10, B64C 1/22, B64C 17/08, B64C 39/02, B64D 9/00

(54) **METHODS FOR FUEL-EFFICIENT TRANSPORTATION OF CARGO BY AIRCRAFT**
VERFAHREN ZUM KRAFTSTOFFSPARENDEN FRACHTTRANSPORT DURCH FLUGZEUGE
PROCEDES DE TRANSPORT DE CHARGEMENT PAR AERONEF A CONSOMMATION DE CARBURANT EFFICACE

(30) Priority: 05.11.2007 US 935328
(43) Date of publication of application: 14.07.2010
(73) Proprietor: Helou, Elie Jr., Carpinteria, CA 93013 (US)
(72) Inventor: Helou, Elie Jr., Carpinteria, CA 93013 (US)
(74) Representative: Viering, Jentschura & Partner
(86) International application number: PCT/US2008/079066
(87) International publication number: WO 2009/061576

(56) References cited:
- US-A- 6 070 460
- US-A1- 2007 125 908
- US-B1- 6 237 795
- US-B1- 6 308 131
- US-B2- 7 003 374
- US-B2- 7 261 257

## Description

### FIELD OF THE INVENTION

The field of the present invention is cargo aircraft for transporting modular containers.

### BACKGROUND OF THE INVENTION

Throughout aviation history, there has been a drive to make air transportation faster, more efficient and more cost effective. The basic parameters relevant to this objective include aerodynamics, engine efficiency and structural weight. Since airplanes are most commonly used for transporting passengers, these parameters are optimized to provide safe, high-speed travel, at the cost of being expensive and providing poorer aerodynamic and fuel efficiency. For example, passenger airlines use jet engines which provide much higher thrust than propellers and are naturally efficient at higher altitudes, being able to operate above 40,000 feet. Jet engines, however, are not as fuel efficient as piston engines or turboprops. Because aircraft of a size capable of carrying substantial cargo have typically been designed first as passenger aircraft, air cargo systems remain both expensive and inconvenient.

Another important consideration to air cargo systems is the significant cargo weight that is added to the aircraft before flight. Adding weight to an aircraft negatively impacts the fuel economy. Moreover, the placement of the added weight relative to the aircraft's center of gravity (CG) is critical to its flight-readiness. Each aircraft has a predetermined range of acceptable CG which must be maintained in order to provide stability and control of the aircraft in flight. Most airplanes have a small range of acceptable CG, usually about 20-30% mean aerodynamic chord (MAC) of an airplane's wing. Thus, the loading and placement of cargo containers onto the aircraft is significant to its flight-readiness. Unfortunately, it is often difficult to accurately determine the placement of cargo containers, as they typically come in a wide variety of shapes, sizes and weight.

The inability of aircraft to participate in intermodal container cargo systems has been disadvantageous to international commerce. The increasing globalization of business and communication has given rise to a greater demand for more rapid international shipping than can be provided by convention ships.

US 7 261 257 B2 discloses an aircraft for carrying a rigid container that provides strength to the aircraft.

### SUMMARY

The present invention is directed to fuel efficient methods for transporting cargo to a desired location via an aircraft. Because the aircraft that is used in connection with the methods disclosed herein are designed primarily for the transportation of cargo and not passengers, the aircraft need not be constrained by the same safety and speed requirements demanded of passenger airlines. For example, the aircraft may be a cargo drone. A cargo drone can take-off, fly and land without a pilot on board and, instead, may be controlled by a remotely located command center that is able to track and monitor the path of the cargo drone by known global positioning satellite (GPS) systems.

Because the cargo drone does not require a pilot or crew on board, flight times are no longer constrained by considerations of avoiding pilot and crew fatigue. Thus, a cargo drone can fly at more fuel-efficient low speeds for long distances and at lower altitudes. Because speed is no longer a concern, the cargo drone may utilize a more fuel efficient engine, such as a piston engine or a turboprop, and fly at altitudes significantly lower than that required of jet engine airlines. The use of a piston or turboprop engine, in turn, allows for the possibility of utilizing renewable fuel, such as biodiesel, which is not suitable for use with jet engines. The cargo drone may therefore be designed for highly efficient flight profiles without needing to accommodate a crew and passengers.

Moreover, the drone aircraft may be equipped with the capability of assessing various weather patterns, to take advantage of these weather patterns in modulating the engine output required for flight, thereby providing greater fuel efficiency. Accordingly, the drone aircraft may be equipped with sensors which are capable of determining the wind direction, strength, and speed and adjust engine output accordingly. If a favorable wind condition is detected by the sensors, then the engine output may be reduced or turned off so as to enable the cargo drone aircraft to glide. When the favorable wind condition is no longer detected by the sensors, the engine may resume its normal mode of operating to power the cargo drone aircraft in flight. Examples of favorable wind conditions include an updraft or lift and a wind having a direction and speed substantially in the same direction of travel or its final destination. Glider airplanes are known to take advantage of upwardly rising air instead of an engine for flight and certain glider airplanes are provided with engines which can be started if conditions no longer support a soaring flight. However, this method of flying relies on the existence of a pilot in the aircraft and thus has not been used for drone aircrafts used for transporting cargo.

The cargo drone suitable for use in connection with the disclosed methods are constructed with the minimal structural requirement, including a forward fuselage, an empennage, a beam structure connecting the forward fuselage to the empennage, and wings attached to the beam structure. Cargo drones suitable for use in connection with the methods are also disclosed in commonly-owned U.S. Patent No. 7,251,257. The beam structure is designed to be as light as possible and the cargo containers are designed to provide the added strength to the beam structure to sustain the various forces which are exerted upon the aircraft in flight. Additional savings in weight are provided by the methods disclosed herein.

In accordance with one embodiment, a fuel-efficient method for transporting cargo to a desired location via an aircraft is provided. The method comprises determining the weight of the cargo capable of being transported in a single container, selecting a container having a sufficient weight capacity to support the cargo based on the determined weight of the cargo, and filling the selected container with the cargo.

The filled container is then loaded onto a location on the aircraft beam relative to the aircraft's CG based on the weight of the filled container to stay within the acceptable CG range for the aircraft. The filled containers having the greater weight are positioned on the beam at or adjacent to the aircraft's CG and the filled containers having lower weight are positioned farther from the aircraft's CG. Once the aircraft is fully loaded, the filled containers provide strength and rigidity to the aircraft beam to sustain the bending and torsional loads in flight when it is loaded onto the aircraft beam.

In a first aspect of the embodiment the method further comprises adjusting the CG of the loaded aircraft by changing the location on the beam where the containers are placed.

In a second aspect of the embodiment, the method further comprises providing customized individual environmental controls to each of the containers.

In a third aspect of the embodiment, the method environmental controls include temperature and pressure controls.

In a fourth aspect of the embodiment, the temperature control is provided by a heating grid contained within the container and an electrical connection from the aircraft to the heating grid.

In a fifth aspect of the embodiment, the temperature control is provided by feeding bleed air from the aircraft engine into the container.

In a sixth aspect of the embodiment, pressure control is provided by regulating input of bleed air fed from the aircraft engine into the container and output of air from the container exit port.

In a seventh aspect of the embodiment, the method further comprises coupling together filled containers having approximately the same total weight before the step of loading the filled container onto the aircraft beam.

In an eighth aspect of the embodiment, the method further comprises detachably mounting the containers onto the beam of the aircraft.

In a ninth aspect of the embodiment, the method further comprises detachably attaching together adjacent containers.

In a tenth aspect of the embodiment, the method further comprises determining wind conditions relative to the direction of travel of the cargo drone aircraft in flight and adjusting the engine output of the cargo drone aircraft based on the determined wind direction and wind speed. Upon determining the existence of a favorable wind condition, the engine output of the cargo drone aircraft is reduced. Upon determining the absence of a favorable wind direction, the engine output of the cargo drone aircraft is resumed.

In an eleventh aspect of the embodiment, the favorable wind condition is an updraft or a lift.

In a twelfth aspect of the embodiment, the favorable wind condition is a wind having a direction that is substantially the same as the direction of travel of the cargo drone aircraft in flight

In a thirteenth aspect of the embodiment, the favorable wind condition is a wind having a direction substantially toward the final destination.

Accordingly, it is an object of the present invention to provide an improved cargo aircraft. Other and further objects and advantages will appear hereinafter.

### BRIEF DESCRIPTION OF THE DRAWINGS

FIG. 1 is a flow diagram showing exemplary steps of the method for transporting cargo to a desired location via an aircraft.
FIG. 2 is a perspective view of cargo container that is used to transport liquids or other high pressure cargo.
FIG. 3 is a perspective view of combinations of cargo containers that may fit within a defined cargo area.
FIG. 4 is a perspective view of an embodiment of a cargo drone aircraft.
FIG. 5 is a partial perspective view with portions broken away for clarity of the aircraft of FIG. 4.
FIG. 6 is a perspective view of an embodiment of a cargo drone aircraft with a ducting system.
FIG. 7 is a perspective view of the ducting system depicted in the cargo drone aircraft of FIG. 6.
FIG. 8 is illustrates the various forces that act upon an aircraft in flight and show the approximate location of the aircraft's CG.
FIG. 9 is a partial side cross-sectional view of a partially loaded aircraft having a plurality of containers of different weights loaded onto the aircraft beam.

### DETAILED DESCRIPTION OF THE PREFERRED EMBODIMENTS

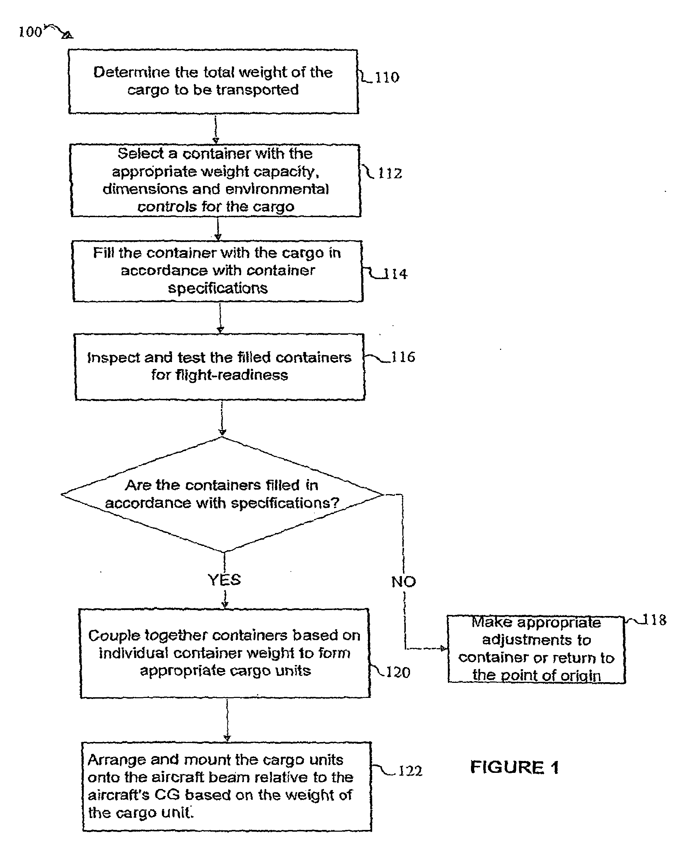

Figure 1 is a flow diagram showing exemplary steps of a method 100 for transporting cargo to a desired location via an aircraft. As shown in step 110, the weight of cargo that is capable of being transported in a single container is determined. Since containers are available in a number of different standard sizes, the weight of the cargo to be transported will depend on the size of the desired container that will be used to transport it. Intermodal containers, for example, are available in a number of standard lengths, such as 20, 40, 45, 48, and 53 ft, and container capacity is typically measured in twenty-foot equivalent units. Because containers are available in a wide range of dimensions, there is flexibility with respect to whether and how cargo may be apportioned out among any number of containers.

Once the total weight of the cargo is determined, a container having the appropriate maximum weight capacity and environmental controls is selected 112. Since the containers are customized to accommodate a range of maximum weight capacities, the strength and weight of each container will depend on the maximum weight capacity the container is intended to accommodate. Containers having higher weight capacities have higher structural strength to support the cargo load and will therefore be heavier than containers having lower weight capacities. The ability to adjust the weight of the containers in accordance with the weight of the cargo provides a significant advantage of reducing the total weight of the loaded aircraft in flight. This, in turn, providing greater fuel efficiency for the aircraft and lower operational costs.

The containers may also provide optional environmental controls which may be required by certain types of cargo. Because the aircraft will be flying for extended time periods and at high altitudes, the cargo onboard will likely experience significant changes in temperature and pressure. Such environmental changes may be harmful to certain types of cargo, such as live animals, foodstuffs and certain chemicals or liquids. Thus, the containers may be equipped with environmental controls that are selected and customized for the type of cargo that the container is carrying.

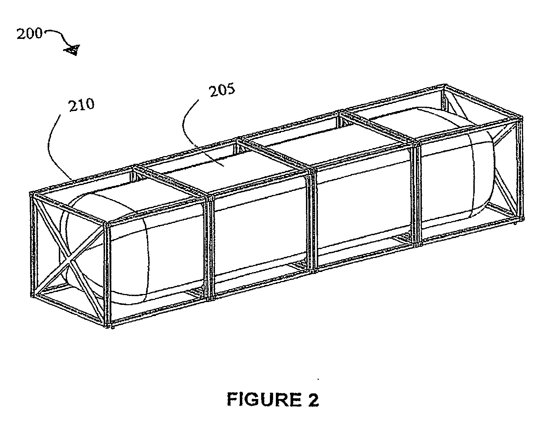

Figure 2 depicts an embodiment of a container 200 that may be used to transport liquids or other cargo requiring higher pressurization. The container 200 generally comprises a rounded inner vessel 205 and an outer support spine 210 which is specially designed to help carry and transfer the normal structural load. The rounded inner vessel 205 is shaped and configured to hold the cargo and maintain the required pressure.

The selected container is then filled with the cargo in accordance with the container specifications 114. The container specifications may provide instructions as to how the container may be properly filled, such as the maximum weight capacity, proper weight distribution of the cargo within the container, and the required volume to which the container must be filled.

Steps 112 through 114 are typically performed at the point of origin for the cargo. Thus, once the containers are filled with the cargo, they may be shipped to assembly facility where the containers are tested and loaded onto the aircraft. Once the filled container arrives at the assembly facility, it may be inspected and tested to verify its flight-readiness 116. The filled containers may be subjected to a shake test to determine if the container was properly loaded. A pressure test may be conducted to verify that the container has not been structurally compromised. A load carrying test may be conducted to verify that the container has the minimum structural integrity. The filled containers may also be subjected to x-ray inspection to determine if they contain any contraband or other illegal products. If the container does not pass the inspection and testing stage 116, adjustments may be made to the container at the assembly facility or the container may be returned to the place where it was originally filled 118.

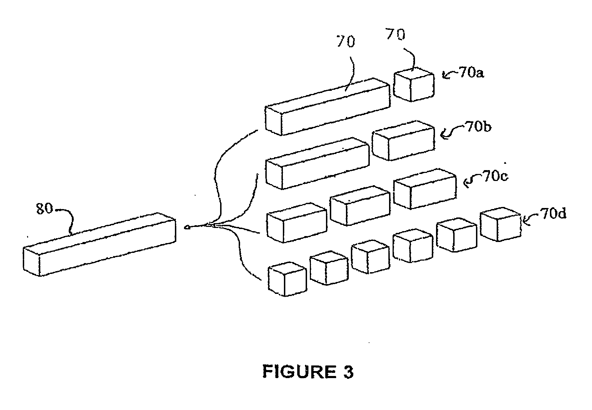

If the containers pass the inspection and testing stage 116, the containers may be loaded onto the aircraft individually or they may be coupled together in groups to form larger cargo units 120. Coupling containers into larger cargo units allows for faster loading of the containers onto the aircraft and reduces the downtime of a grounded aircraft. The containers may be coupled together in accordance with their individual total weights - heavy weight containers coupled to other heavy weight containers to form a heavy weight cargo unit and light weight containers coupled to other light weight containers to form a light weight cargo unit. Moreover, cargo containers of different dimensions within a given weight range may be coupled together in any number of arrangements. Figure 3 illustrates various arrangements of cargo containers 70a-d that may fit within a given cargo area 80.

Each cargo unit may be defined by having individual cargo units having a weight within a predetermined weight range. For example, the weight range for a heavy weight cargo unit may be approximately 30,000 to 40,000 lbs, approximately 20,000 to 29,999 lbs for a medium weight cargo unit, and approximately 10,000 to 19,999 lbs for a light weight cargo unit. Larger or smaller weight range increments may be provided for the various cargo units depending on the size of the containers and aircraft capacity.

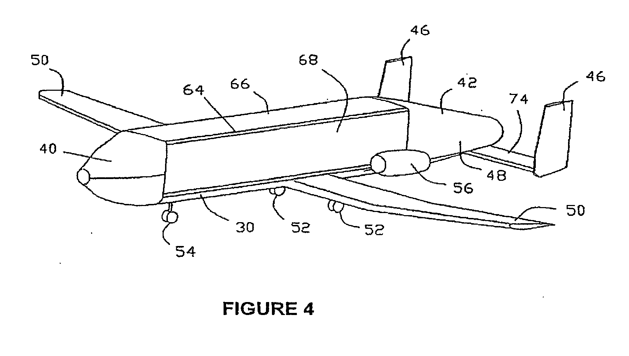

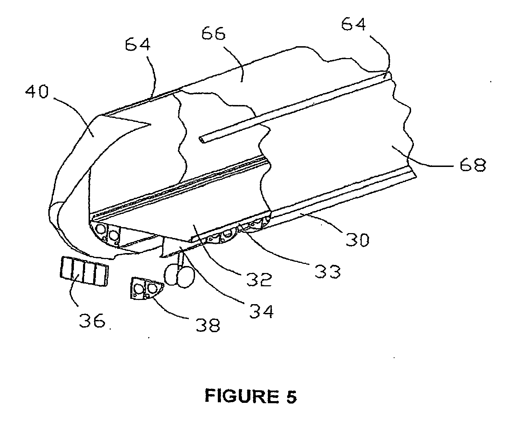

Referring back to Figure 1, the cargo units may then be arranged and mounted onto the aircraft relative to the aircraft's center of gravity (CG) 122. With respect to the types of aircraft that may be used in connection with the disclosed methods, figures 4 and 5 illustrate a drone aircraft that is particularly suitable for use in connection with the methods.

The drone aircraft generally comprises a forward fuselage 40, an empennage 42, a beam structure 30 connecting the forward fuselage 40 to the empennage 42, and wings 50 attached to the beam structure 30. The forward fuselage 40 is shown to be that of a drone with no cockpit. Since the Shuttle SRTM mapping mission, it has been possible to have extended commercial flights without human intervention. A cargo drone can fly at low speeds for long distances without concern for crew time and passenger fatigue. The aircraft can therefore be designed for highly efficient flight profiles without accommodation for crew and passengers.

The details of the beam structure 30 are better illustrated in Figure 5. As previously discussed above, the cargo containers provide strength to the beam structure 30. The beam structure 30 is designed to be as light as possible. As such, the beam structure 30 is capable of supporting takeoff loads, flight loads and landing loads of the aircraft when free of cargo. Additionally, the beam structure 30 must be sufficient to support compression loads upon landing even when fully loaded. However, the beam structure 30 is not required to fully sustain bending and torsional loads in flight, landing and takeoff when a rigid cargo container or multiple such containers are in place in the aircraft. The additional rigidity required is supplied by the cargo containers. To this end, the containers are constructed with sufficient structure and rigidity and are securely mounted to the beam structure 30 such that bending and torsional forces experienced by the beam structure 30 are imposed upon the securely mounted container or containers.

The beam structure 30 includes a floor 32 which may include rollers and/or antifriction devices to facilitate longitudinal movement of a cargo container along the surface of the floor 32. Restraining flanges 33 run along each longitudinal side of the floor 32. In addition to the floor 32, the beam structure 30 includes I-beams 34 with bulkheads 36, 38 positioned periodically along the beam structure 30 and affixed to the floor 32 and the I-beams 34. The beam structure 30 becomes a rigid structure which is preferably sufficient to support the aircraft in flight when empty but cannot support the aircraft in flight when loaded. Corner elements 64 may also be provided to augment the structural rigidity to the beam structure 30 and to retain optional fairing panels 66 and 68.

An empennage 42 is attached to the other end of the beam structure 30. The empennage 42 includes laterally extending horizontal stabilizers 44 with twin vertical stabilizers 46 positioned at the outer ends of the horizontal stabilizers 44. The empennage 42 may be removed from association with the beam as a unit so as to provide access to the beam structure 30.

Wings 50 are also structurally associated with the beam structure 30. The wings 50 as well as the beam structure 30 may contain fuel tanks. Landing gear 52 are provided under the wings 50; and a forward gear 54 is provided under the beam structure 30. The wings 50 may be removed from association with the beam as a unit.

Engines 56 are shown in the embodiment of Figure 1 to be directly mounted to the beam structure 30. The engines 56 may be mounted anywhere relative to the beam structure 30 so long as the aircraft CG remains within a range that is acceptable for flight. The engines 56 may each be removed from association with the beam as a unit.

Mounts may be provided on the beam structure 30. These mounts may be bolted or otherwise retained on the floor 32. Further, incremental adjustments are preferably provided in order that the mounts can attach to the container or containers, while accommodating variations in container length and placement. Such incremental adjustment may be provided by patterns of attachment holes in the floor 32 to allow for lateral or longitudinal repositioning of the mounts once the container or containers are in place. The mounts may be located or positionable along the full length of the floor 32 or at incremental positions reflecting standard container sizes.

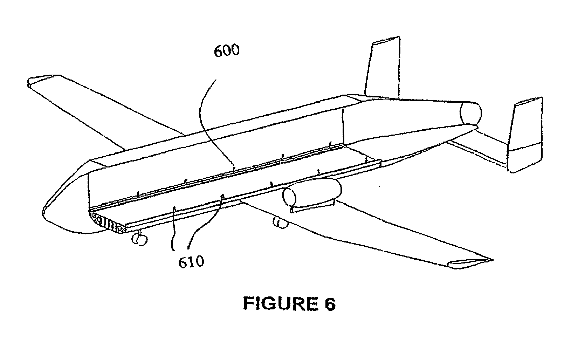

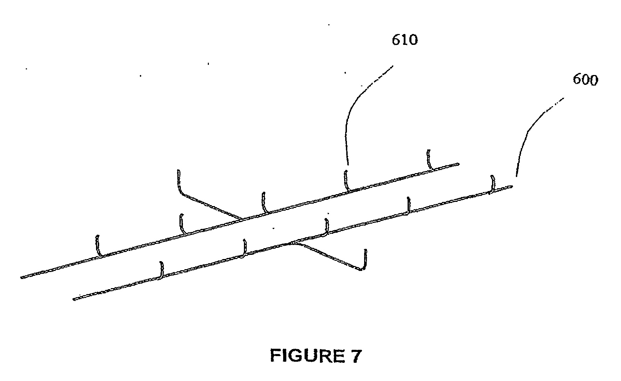

The aircraft may further comprise a ducting system which provides the customized environmental controls to the containers. Figures 6 and 7 show an aircraft comprising a ducting system 600 which is configured to provide customized environmental controls to individual containers via the container connections 610. The connections 610 may be used to regulate the temperature and pressure within each container. For example, the connections 610 may provide pressure and temperature control by providing bleed air from the engine. Heat control may also be provided by electrical connections to power heating elements which may be provided by the containers themselves.

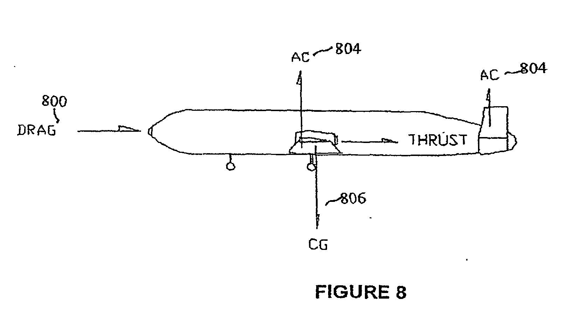

The cargo containers are arranged on the aircraft beam in accordance with their weight so as to provide the proper weight distribution to maintain the aircraft's CG within a range acceptable for flight. Figure 8 shows the approximate location of an aircraft's CG. Generally, shifting the CG outside of the acceptable range, for example, too far forward will make the aircraft behave as if it is nose heavy and too far backward will make the aircraft behave tail heavy. Figure 8 also shows the various forces that act upon an aircraft in flight. A drag force 800 is exerts a force upon the aircraft in a direction opposite of its direction of travel and is caused by the outside geometry of the aircraft. A thrust force 802 is provided by the engine which also causes a moment arm depending on where the center of thrust is located. An upward force or lift 804 is provided by the aerodynamic center (AC) of the wing, whereas a corresponding downward force 806 is exerted by the total weight of the aircraft. As can be shown, an aircraft's flight efficiency may be increased by decreasing weight carried by the aircraft which, in turn, decreases the downward force exerted on the aircraft.

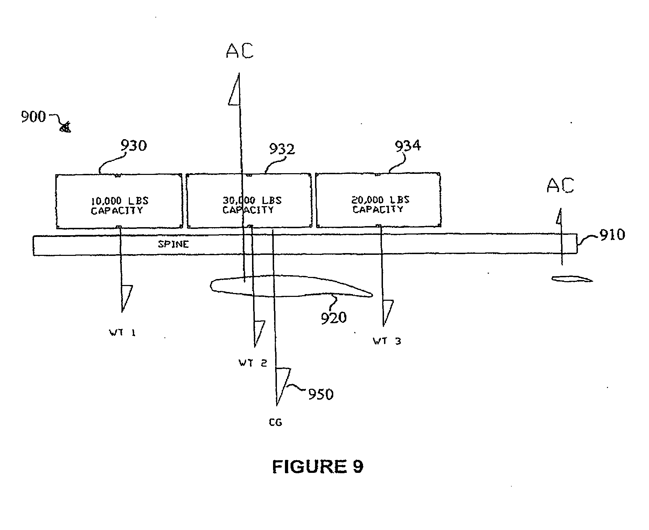

Figure 9 shows a partial side cross-sectional view of a partially loaded aircraft 900, including the aircraft beam 910, the wings 920 and a plurality of containers 930, 932 and 934, each having different weights, loaded on top of the beam 910. As can be seen in Figure 9, the arrangement of the containers 930, 932 and 934 on the beam 910 is made relative to the aircraft's center of gravity 950, with the heaviest container 332 located approximately at the aircraft's CG 350 and the lightest container 330 located farther from the aircraft's CG. In general, the heavier the cargo container, the closer it is located to the aircraft's CG and the lighter the cargo container, the farther it is displaced from the aircraft's CG.

Another reason the placement of the cargo containers on the beam structure relative to the aircraft CG is that the cargo containers themselves provides needed strength to the beam structure. The beam structure is designed to be as light as possible. As such, the beam structure is capable of supporting takeoff loads, flight loads and landing loads of the aircraft when free of cargo. Additionally, the beam structure must be sufficient to support compression loads upon landing even when fully loaded. However, the beam structure is not required to fully sustain bending and torsional loads in flight, landing and takeoff when a rigid cargo container or multiple such containers are in place in the aircraft. The additional rigidity required is supplied by the rigid cargo containers. To this end, the containers are constructed with sufficient structure and rigidity and are securely mounted to the beam structure such that bending and torsional forces experienced by the beam structure 30 are imposed upon the securely mounted container or containers.

In most airplanes, the bending and torsional forces are greatest at or near the CG, requiring greater structural strength to be added to the beam. Because heavier containers will necessarily have a more reinforced structure than the lighter containers, placement of the heavier containers at the aircraft's CG will also provide the structural strength needed for the aircraft beam to withstand the bending and torsional forces which are exerted upon it.

Thus, improved cargo aircraft have been disclosed. While embodiments and applications of this invention have been shown and described, it would be apparent to those skilled in the art that many more modifications are possible without departing from the inventive concepts herein. The invention, therefore, is not to be restricted except in the scope of the appended claims.

## Claims

1. A fuel-efficient method for transporting cargo (70, 70a - 70d) to a desired location via an aircraft having a forward fuselage (40), an empennage (42), wings (50), and a beam structure (30) connecting the forward fuselage (40) and the empennage (42), the aircraft having a CG as a center of gravity range acceptable for flight, the method comprising:
determining the weight of the cargo capable of being transported in a single container; selecting a container having a sufficient weight capacity to support the cargo based on the determined weight of the cargo;
filling the selected container with the cargo;
loading the filled container onto a location on the aircraft beam (30) relative to the aircraft's CG based on the weight of the filled container to maintain the aircraft CG within the range acceptable for flight;
wherein the filled containers having the higher weight are positioned on the beam (30) at or adjacent to the aircraft's CG;
wherein filled containers having lower total weight are positioned farther from the aircraft's CG; and
wherein the filled containers provide strength and rigidity to the aircraft beam (30) to sustain the bending and torsional loads in flight when it is loaded onto the aircraft beam (30).

2. The method of claim 1 further comprises adjusting the CG of the loaded aircraft by changing the location on the beam (30) where the containers are placed.

3. The method of claim 1 further comprises providing customized individual environmental controls (600, 610) to each of the containers.

4. The method of claim 3, wherein the environmental controls include temperature and pressure controls (600, 610).

5. The method of claim 4, wherein temperature control is provided by a heating grid contained within the container and an electrical connection from the aircraft to the heating grid.

6. The method of claim 4, wherein temperature control is provided by feeding bleed air from the aircraft engine into the container.

7. The method of claim 4, wherein pressure control is provided by regulating input of bleed air fed from the aircraft engine into the container and output of air from the container exit port.

8. The method of claim 1 further comprising coupling together filled containers having approximately the same total weight before the step of loading the filled container onto the aircraft beam (30).

9. The method of claim 1 further comprising detachably mounting the containers onto the beam (30) of the aircraft.

10. The method of claim 9 further comprising detachably attaching together adjacent containers.

11. The method of claim 1 further comprising
determining wind conditions relative to the direction of travel of the cargo drone aircraft in flight;
adjusting the engine output of the cargo drone aircraft based on the determined wind conditions;
causing a reduction of the engine output of the cargo drone aircraft upon determining the existence of a favorable wind condition; and
resuming engine output of the cargo drone aircraft upon determining the absence of a favorable wind condition.

12. The method of claim 11, wherein the favorable wind condition is an updraft or lift.

13. The method of claim 11, wherein the favorable wind condition is a wind having a direction that is substantially the same as the direction of travel of the cargo drone aircraft in flight.

14. The method of claim 11, wherein the favorable wind condition is a wind having a direction substantially toward the final destination.

## Patentansprüche

1. Ein kraftstoffeffizientes Verfahren zum Transportieren von Frachtgut (70, 70a-70d) an einen gewünschten Ort mit einem Flugzeug, das aufweist: einen vorlaufenden Rumpf (40), ein Leitwerk (42), Flügel (50) und eine Trägerstruktur (30), die den vorlaufenden Rumpf (40) und das Leitwerk (40) miteinander verbindet, wobei das Flugzeug einen Schwerpunkt als einen zum Fliegen geeigneten Schwerpunktbereich hat, wobei das Verfahren aufweist:
Ermitteln des Gewichts des Frachtgutes, das in einem einzelnen Container transportiert werden kann,
Auswählen eines Containers, der eine ausreichende Tragfähigkeit hat, um das Frachtgut zu tragen, auf der Grundlage des ermittelten Gewichts des Frachtgutes,
Befüllen des ausgewählten Containers mit dem Frachtgut,
Laden des gefüllten Containers in eine Position an dem Flugzeugträger (30) bezüglich des Flugzeugschwerpunktes auf der Grundlage des Gewichts des gefüllten Containers, um den Flugzeugschwerpunkt innerhalb des zum Fliegen geeigneten Bereichs zu halten,
wobei die gefüllten Container mit dem höheren Gewicht bei oder benachbart zu dem Flugzeugschwerpunkt an dem Träger (30) positioniert werden,
wobei gefüllte Container mit einem geringeren Gesamtgewicht weiter entfernt von dem Flugzeugschwerpunkt angeordnet werden, und
wobei die gefüllten Container dem Flugzeugträger (30) Festigkeit und Steifigkeit verleihen, um die Biege- und Torsionsbelastungen beim Fliegen aufzunehmen, wenn sie auf den Flugzeugträger (30) geladen sind.

2. Das Verfahren gemäß Anspruch 1, ferner aufweisend das Anpassen des Schwerpunktes des beladenen Flugzeugs durch Ändern der Position auf dem Träger (30), wo die Container platziert werden.

3. Das Verfahren gemäß Anspruch 1, ferner aufweisend das Bereitstellen von spezifischen individuellen Umfeldsteuerungen (600, 610) für jeden der Container.

4. Das Verfahren gemäß Anspruch 3, wobei die Umfeldsteuerungen Temperatur- und Drucksteuerungen (600, 610) beinhalten.

5. Das Verfahren gemäß Anspruch 4, wobei die Temperatursteuerung mittels eines Heizgitters, das in dem Container aufgenommen ist, und einer elektrischen Verbindung zwischen dem Flugzeug und dem Heizgitter bereitgestellt wird.

6. Das Verfahren gemäß Anspruch 4, wobei die Temperatursteuerung durch Zuführen von Entlüftungsluft aus dem Flugzeugmotor in den Container erfolgt.

7. Das Verfahren gemäß Anspruch 4, wobei die Drucksteuerung durch Regeln des Einspeisens von aus dem Flugzeugmotor zugeführter Entlüftungsluft in den Container und des Ablassens von Luft aus der Container-Ausgangsöffnung bereitgestellt wird.

8. Das Verfahren gemäß Anspruch 1, ferner aufweisend das Verbinden von gefüllten Containern miteinander, die ungefähr das gleiche Gesamtgewicht haben, vor dem Schritt des Ladens des gefüllten Containers auf den Flugzeugträger (30).

9. Das Verfahren gemäß Anspruch 1, ferner aufweisend das lösbare Montieren der Container an dem Träger (30) des Flugzeugs.

10. Das Verfahren gemäß Anspruch 9, ferner aufweisend das lösbare Aneinanderfügen von benachbarten Containern.

11. Das Verfahren gemäß Anspruch 1, ferner aufweisend:
Ermitteln von Windbedingungen bezüglich der Bewegungsrichtung des Frachtdrohnenflugzeugs beim Fliegen,
Anpassen der Motorleistung des Frachtdrohnenflugzeugs auf der Grundlage der ermittelten Windbedingungen,
Bewirken einer Verringerung der Motorleistung des Frachtdrohnenflugzeugs beim Ermitteln des Vorhandenseins einer günstigen Windbedingung, und
Wiederaufnehmen an Motorleistung des Frachtdrohnenflugzeugs beim Ermitteln der Abwesenheit einer günstigen Windbedingung.

12. Das Verfahren gemäß Anspruch 11, wobei die günstige Windbedingung ein Aufwind oder Auftrieb ist.

13. Das Verfahren gemäß Anspruch 11, wobei die günstige Windbedingung ein Wind mit einer Richtung ist, die im Wesentlichen der Bewegungsrichtung des Frachtdrohnenflugzeugs beim Fliegen entspricht.

14. Das Verfahren gemäß Anspruch 11, wobei die günstige Windbedingung ein Wind mit einer Richtung im Wesentlichen in Richtung zu dem Bestimmungsort ist.

## Revendications

1. Procédé de transport d'une cargaison (70, 70a - 70d) à bon rendement énergétique à destination d'un endroit souhaité, par l'intermédiaire d'un aéronef qui présente un fuselage avant (40), un empennage (42), des ailes (50) et une structure de longeron (30) qui relie le fuselage avant (40) et l'empennage (42), l'aéronef présentant un CG en tant que plage de centre de gravité acceptable pour le vol, le procédé comprenant les étapes de :
déterminer le poids de la cargaison pouvant être transportée dans un seul conteneur ;
sélectionner un conteneur qui présente une capacité de poids suffisante pour supporter la cargaison sur la base du poids de la cargaison déterminé ;
remplir le conteneur sélectionné avec la cargaison ;
charger le conteneur rempli à un emplacement sur le longeron de l'aéronef (30) par rapport au CG de l'aéronef sur la base du poids du conteneur rempli de façon à maintenir le CG de l'aéronef à l'intérieur de la plage acceptable pour le vol ;
dans lequel les conteneurs remplis qui présentent le poids le plus élevé sont positionnés sur le longeron (30) au niveau du CG de l'aéronef ou adjacents au CG de l'aéronef ;
dans lequel les conteneurs remplis qui présentent le poids total le plus faible sont positionnés plus loin du CG de l'aéronef ; et
dans lequel les conteneurs remplis procurent une solidité et une rigidité au longeron de l'aéronef (30) de façon à supporter les efforts de flexion et de torsion en vol quand il sont chargés sur le longeron de l'aéronef (30).

2. Procédé selon la revendication 1, comprenant en outre une étape consistant à régler le CG de l'aéronef chargé en modifiant l'emplacement où sont placés les conteneurs sur le longeron (30).

3. Procédé selon la revendication 1, comprenant en outre une étape consistant à fournir des commandes environnementales individuelles personnalisées (600, 610) à chacun des conteneurs.

4. Procédé selon la revendication 3, dans lequel les commandes environnementales comprennent des commandes de température et de pression (600,610).

5. Procédé selon la revendication 4, dans lequel une commande de température est fournie par une grille chauffante contenue dans le conteneur et une connexion électrique est fournie par l'aéronef à la grille chauffante.

6. Procédé selon la revendication 4, dans lequel la commande de température est fournie en introduisant dans le conteneur de l'air de prélèvement en provenance d'un moteur de l'aéronef.

7. Procédé selon la revendication 4, dans lequel la commande de pression est fournie en régulant l'entrée de l'air de prélèvement introduit en provenance d'un moteur de l'aéronef dans le conteneur, et la sortie de l'air en provenance de l'orifice de sortie du conteneur.

8. Procédé selon la revendication 1, comprenant en outre une étape consistant à accoupler ensemble les conteneurs remplis qui présentent approximativement le même poids total avant l'étape consistant à charger le conteneur rempli sur le longeron de l'aéronef (30).

9. Procédé selon la revendication 1, comprenant en outre une étape consistant à monter de manière détachable les conteneurs sur le longeron (30) de l'aéronef.

10. Procédé selon la revendication 9, comprenant en outre une étape consistant à attacher ensemble de manière détachable des conteneurs adjacents.

11. Procédé selon la revendication 1, comprenant en outre les étapes de :
déterminer les conditions de vent par rapport à la direction du déplacement de l'aéronef drone cargo en vol ;
régler la puissance du moteur de l'aéronef drone cargo sur la base des conditions de vent déterminées ;
provoquer une réduction de la puissance du moteur de l'aéronef drone cargo lors d'une détermination de l'existence d'une condition de vent favorable ; et
restaurer la puissance du moteur de l'aéronef drone cargo lors d'une détermination de l'absence d'une condition de vent favorable.

12. Procédé selon la revendication 11, dans lequel la condition de vent favorable est une ascendance ou une portance.

13. Procédé selon la revendication 11, dans lequel la condition de vent favorable est un vent qui présente une direction qui est sensiblement identique à la direction de déplacement de l'aéronef drone cargo en vol.

14. Procédé selon la revendication 11, dans lequel la condition de vent favorable est un vent qui présente une direction qui est orientée sensiblement vers la destination finale.
